# FASCICULE DE BREVET EUROPEEN

(11) **EP 1 099 463 B1**
(45) Date de publication et mention de la délivrance du brevet: **03.08.2005**
(21) Numéro de dépôt: 00403096.1
(22) Date de dépôt: 08.11.2000
(51) Int. Cl.: B01D 53/00, B01D 53/047, G10K 11/16, B01D 171/10, B01D 171/20, B01D 53/04, E04B 1/82

(54) **Installation de traitement d'air munie de moyens d'atténuation du bruit**
Luftbehandlungsanlage mit Mitteln zur Geräuschreduzierung
Air treatment plant with sound suppressing means

(30) Priorité: 10.11.1999 FR 9914176
(43) Date de publication de la demande: 16.05.2001
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Andreani, Philippe, Houston, TX 77077 (US); Berta, Christian, 94350 Villiers sur Marne (FR); Wellnitz, Thomas, 75015 Paris (FR)
(74) Mandataire: Le Moenner, Gabriel

(56) Documents cités:
- EP-A- 0 250 627
- EP-A- 0 860 647
- FR-A- 2 563 559
- US-A- 4 378 982
- PATENT ABSTRACTS OF JAPAN vol. 007, no. 225 (C-189), 6 octobre 1983 (1983-10-06) & JP 58 119321 A (HITACHI SEISAKUSHO KK), 15 juillet 1983 (1983-07-15)
- PATENT ABSTRACTS OF JAPAN vol. 1996, no. 02, 29 février 1996 (1996-02-29) & JP 07 275632 A (TEIJIN LTD), 24 octobre 1995 (1995-10-24)
- PATENT ABSTRACTS OF JAPAN vol. 011, no. 369 (C-461), 2 décembre 1987 (1987-12-02) & JP 62 140619 A (TEIJIN LTD), 24 juin 1987 (1987-06-24)

## Description

La présente invention concerne une installation de traitement d'air du type comportant au moins une mise à l'atmosphère du gaz résiduaire reliée à des moyens d'atténuation du bruit véhiculé par ce gaz résiduaire.

L'invention s'applique notamment aux installations de production d'un gaz de l'air, typiquement d'oxygène par adsorption à partir d'air, en particulier du type VSA (Vacuum Swing Adsorption ou adsorption à pression modulée avec mise sous vide).

De telles installations comprennent généralement au moins un récipient d'adsorption et un compresseur d'air relié par son côté refoulement à un premier côté (entrée) du récipient d'adsorption par l'intermédiaire d'une conduite d'alimentation. Au deuxième côté (sortie) du récipient d'adsorption sont reliées une conduite de production menant à l'utilisateur et une conduite d'élution/ repressurisation. Une pompe à vide, généralement une pompe à vide du type Roots sèche ou humide, est reliée au premier côté du récipient d'adsorption. Tous les composants peuvent être connectés individuellement au récipient d'adsorption, et isolés de celui-ci, par des vannes. Le fonctionnement de telles installations comprend un cycle avec essentiellement trois phases :
- Pendant la phase active ou de production, qui s'effectue généralement au voisinage de la pression atmosphérique, le compresseur aspire de l'air de l'environnement et l'introduit dans l'adsorbeur, où une première partie des constituants de l'air, notamment l'azote, est adsorbée et une deuxième partie, notamment l'oxygène, est récupérée à la sortie de l'adsorbeur en tant que gaz utile et passe alors dans le réservoir.
- Lors d'une deuxième phase ou phase de régénération, l'introduction de l'air dans l'adsorbeur est arrêtée.

Ensuite, l'adsorbeur est vidé de l'azote, dans un premier temps par mise sous vide en utilisant la pompe à vide, et dans un deuxième temps par balayage à la basse pression au moyen d'oxygène produit pendant la phase active (élution).

La pompe à vide aspire du gaz dans l'adsorbeur et le refoule à travers un silencieux à l'atmosphère.
- Pendant une troisième phase de repressurisation, l'adsorbeur est repressurisé avec de l'oxygène.

Pour la réduction du niveau sonore du gaz refoulé par une pompe à vide d'une installation VSA, on utilise, dans l'état de la technique, un silencieux aérien. Un tel silencieux comprend généralement une enveloppe en tôle comportant plusieurs parties. Des moyens d'atténuation de bruit de type réactif (par exemple des tubes d'impédance) et de type absorptif (par exemple des baffles) sont agencés, successivement, dans cet ordre, de l'entrée vers la sortie à l'intérieur des différentes parties. Des moyens d'atténuation de bruit de type actif (par exemple des haut-parleurs pilotés produisant un contre-bruit) peuvent compléter ou remplacer au moins en partie les systèmes réactifs ou adsorptifs.

D'une manière générale, ces silencieux ne permettent pas d'atteindre des niveaux de bruit suffisamment bas, surtout lorsqu'on utilise des pompes à vide du type Roots qui ont un spectre de fréquences difficile à atténuer à cause d'une proportion importante de fréquences basses. De plus, les silencieux sont très encombrants, et leur corps en tôle rayonne du bruit pendant le fonctionnement. Par ailleurs, de tels silencieux sont très coûteux.

Il existe un grand nombre de variantes d'installations de séparation de gaz par adsorption à pression modulée.

Deux exemples (non limitatifs) de telles installations sont décrits dans les documents US 5,223,004 et EP 0 598 321.

L'invention a pour but de pallier les inconvénients expliqués ci-dessus et de fournir un silencieux pour une installation industrielle du type précité qui fournisse une atténuation de bruit augmentée, qui ait un coût diminué et qui soit peu encombrant.

A cet effet l'invention a pour objet une installation du type précité, caractérisée en ce que les moyens d'atténuation de bruit comprennent une enceinte sensiblement fermée et au moins partiellement enterrée et comprenant un recouvrement au moins partiel en terre ou en matériau analogue.

Suivant des modes particuliers de réalisation l'invention peut comporter une ou plusieurs des caractéristiques suivantes :
- l'enceinte est totalement enterrée ;
- une partie au moins de l'installation est agencée au-dessus de ladite enceinte ;
- l'installation comporte au moins une autre mise à l'atmosphère raccordée auxdits moyens d'atténuation de bruit ;
- lesdits moyens d'atténuation de bruit comportent successivement, d'une entrée de gaz à une sortie de gaz, des moyens d'atténuation de bruit réactifs et des moyens d'atténuation de bruit absorptifs ;
- lesdits moyens d'atténuation de bruit réactifs comportent deux organes d'atténuation de bruit réactifs en série ;
- les moyens d'atténuation de bruit réactifs comportent des tubes d'impédance ;
- l'installation comporte au moins une pompe à vide, notamment destinée à refouler le gaz résiduaire, dont le côté refoulement est relié auxdits moyens d'atténuation de bruit ;
- l'installation comporte des moyens de liaison du côté aspiration de la pompe à vide auxdits moyens d'atténuation de bruit, pour une marche de la pompe à vide sur elle-même ;
- l'installation comporte des moyens de liaison du côté aspiration de la pompe à vide auxdits moyens d'atténuation de bruit en aval du premier organe d'atténuation de bruit réactif et en amont du deuxième organe d'atténuation de bruit réactif, tandis que le côté refoulement de la pompe à vide est relié auxdits moyens d'atténuation de bruit réactifs en amont du premier organe d'atténuation de bruit réactif ;
- la pompe à vide est une pompe à vide Roots sèche ou humide ;
- l'enceinte est fabriquée en béton, en maçonnerie ou analogue ;
- l'enceinte comporte une cheminée d'échappement de gaz notamment en béton, en maçonnerie ou analogue ;
- la cheminée comporte des moyens d'atténuation de bruit supplémentaires, notamment de type absorptif ou actif ;
- l'enceinte comporte des moyens de recueil et d'extraction d'eau ;
- l'installation est une installation industrielle de séparation de gaz de l'air par adsorption à modulation de pression, typiquement pour la production d'oxygène à partir de l'air ; et
- l'enceinte comprend ces moyens de récupération de chaleur pour mettre le gaz résiduaire en relation d'échange thermique avec l'air entrant.

L'invention sera mieux comprise à la lecture de la description qui va suivre, donnée uniquement à titre d'exemple et faite en se référant aux dessins annexés, sur lesquels :
- la Figure 1 est une vue schématique d'un mode de réalisation d'une installation VSA de production d'oxygène, selon l'invention;
- la Figure 2 est une vue de dessous et en coupe longitudinale du silencieux selon la ligne 2-2 de la Figure 3;
- la Figure 3 est une coupe longitudinale du silencieux le long de la ligne 3-3 de la Figure 2.

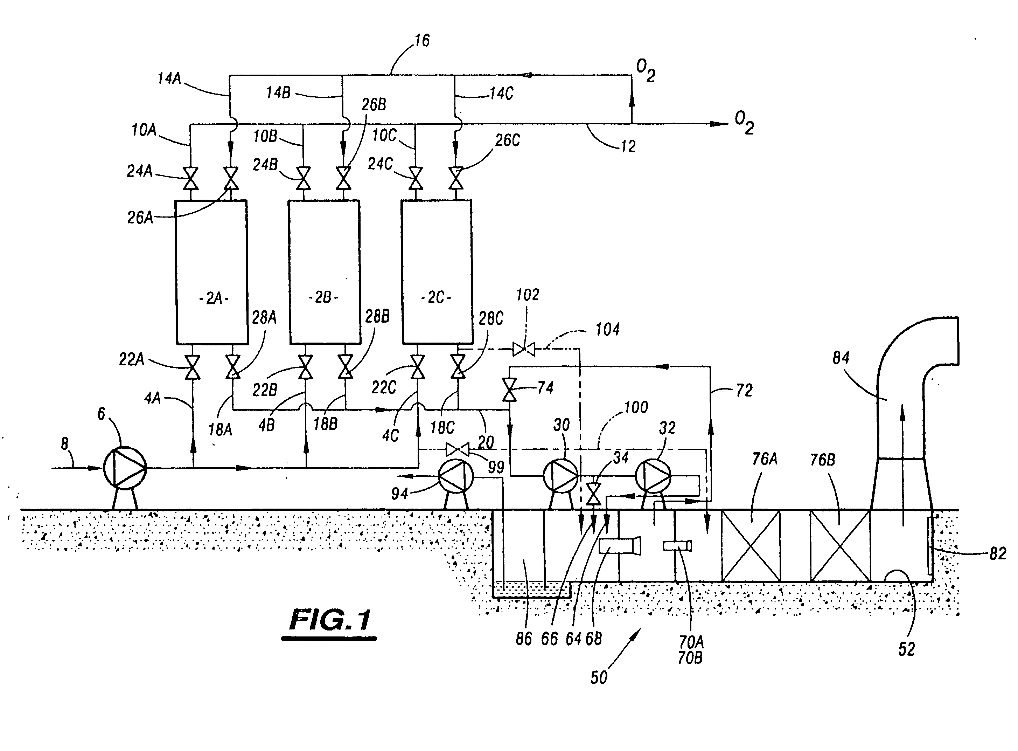

L'installation particulière représentée sur la Figure 1 comporte trois adsorbeurs identiques 2A, 2B, 2C. Chaque adsorbeur est relié par son extrémité inférieure à une conduite d'alimentation en air 4A, 4B, 4C venant du refoulement d'un compresseur 6 de type Roots ou centrifuge. Le côté aspiration du compresseur 6 est relié à une conduite 8 ouverte à l'atmosphère environnante.

Sur chaque adsorbeur 2A, 2B, 2C se trouve un raccordement 10A, 10B, 10C à une conduite de production 12 menant à l'utilisateur. Chaque adsorbeur 2A, 2B, 2C comporte également une liaison 14A, 14B, 14C à une conduite 16 d'élution/repressurisation parcourue par une partie de l'oxygène de la conduite de production 12. Chacun des adsorbeurs 2A, 2B, 2C est relié par un raccordement 18A, 18B, 18C, à une conduite d'évacuation 20. A chacun des adsorbeurs sont associées quatre vannes, à savoir une vanne d'alimentation 22A, 22B, 22C, une vanne de production 24A, 24B, 24C, une vanne d'élution/repressurisation 26A, 26B, 26C et une vanne d'évacuation 28A, 28B, 28C. Par ces vannes la liaison des adsorbeurs 2A, 2B, 2C aux conduites précitées peut être établie et interrompue individuellement.

Dans le mode de réalisation représenté, la conduite d'évacuation 20 mène au côté aspiration d'une première pompe à vide Roots 30. Le côté refoulement de cette première pompe à vide 30 est relié à une pièce chaudronnée qui mène, d'une part, au côté aspiration d'une deuxième pompe à vide Roots 32 et, d'autre part, à travers une vanne 34, à l'entrée d'un silencieux enterré généralement désigné par la référence 50. Ce silencieux 50 est sensiblement fermé, c'est-à-dire qu'il a une structure close à l'exception des ouvertures d'entrée et de sortie de gaz. L'expression « enterré » signifie dans ce contexte que le silencieux est recouvert, au moins partiellement, sur ses parois latérales, et éventuellement sur sa paroi supérieure, par de la terre ou un matériau analogue. Le côté refoulement de la deuxième pompe à vide 32 est également relié à l'entrée du silencieux enterré 50. Les pompes peuvent notamment être à 2 ou 3 lobes.

Afin de réduire l'encombrement, au moins une partie des composants de l'installation sont agencés avantageusement directement au-dessus du silencieux enterré 50. En particulier, dans le mode de réalisation représenté, les pompes à vide sont agencées au-dessus du silencieux.

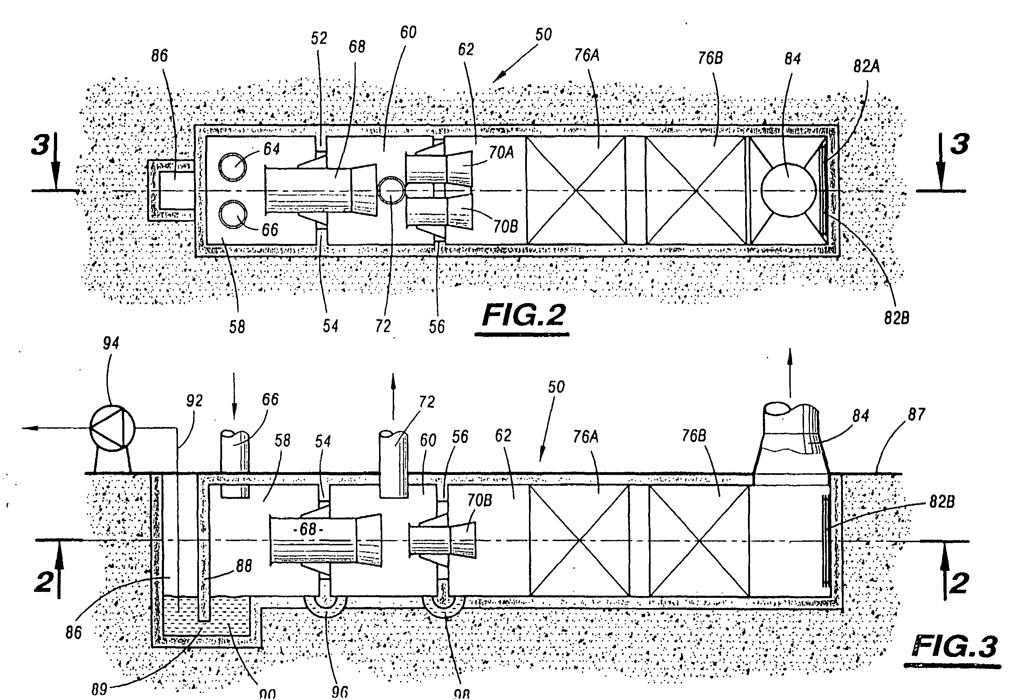

Le silencieux enterré 50, typiquement disposé dans une tranchée creusée dans le sol, comprend essentiellement une enceinte 52 avantageusement en béton armé (Figures 2 et 3), typiquement de forme allongée horizontalement, qui est divisée par exemple par deux cloisons transversales 54, 56 en trois chambres successives. En variante, l'enceinte 52 peut être faite en maçonnerie, en parpaings denses ou tout autre matériau approprié.

Deux raccordements 64, 66 venant des deux pompes à vide 30, 32 sont agencés au sommet de la première chambre 58. Des moyens d'atténuation de bruit de type réactif sont avantageusement agencés dans les deux cloisons 54, 56. Ainsi, un grand tube d'impédance 68 est monté dans une ouverture rectangulaire agencée dans la première cloison 54 qui sépare la première chambre 58 de la deuxième chambre 60 et deux petits tubes d'impédance 70A, 70B montés sur une plaque sont agencés dans des ouvertures rectangulaires de la cloison 56 séparant la deuxième chambre 60 de la troisième chambre 62. Une conduite d'aspiration 72 mène du sommet de la deuxième chambre 60 (Figure 1), à travers une vanne d'obturation 74 (Figure 1), à la conduite d'évacuation 20 menant au côté aspiration de la première pompe à vide 30, pour une marche des pompes à vide sur elles-mêmes. La troisième chambre 62 comprend typiquement des moyens d'atténuation de bruit de type absorptifs, comprenant par exemple des baffles portés par deux châssis successifs 76A, 76B disposés dans la chambre 62.

Deux baffles muraux insonorisants 82A, 82B sont agencées verticalement sur la paroi aval de la troisième chambre 62 pour s'opposer à la réflexion des ondes sonores. Une cheminée 84, par exemple en tôle galvanisée, est montée sur le sommet de la troisième chambre 62, à l'extrémité opposée aux tubes d'impédance 70A, 70B, pour rejeter les gaz d'échappement à bonne hauteur.

Un puits à eau 86 est avantageusement agencé à l'extérieur de l'enceinte 52 et il s'étend de la surface du sol 87 jusqu'au-dessous du fond inférieur de l'enceinte 52 en béton. Le puits 86 comporte, sous l'une des parois, qui est ici la paroi amont 88 de cette enceinte, une ouverture 89 de communication avec une cuvette 90 ménagée dans le fond de la première chambre 58. Une conduite d'évacuation 92 plongeant dans le puits 86 mène à une pompe à eau 94 qui est destinée à extraire de l'eau de ce puits 86. Il est à noter que l'entrée de cette conduite 92 se trouve au-dessus de l'ouverture de communication 89, de façon telle que cette dernière soit toujours immergée pour assurer l'isolation phonique entre la première chambre 58 et le puits 86. Deux canaux 96, 98 à section en U sont agencés transversalement, au-dessous des deux cloisons respectivement, afin de permettre à l'eau se trouvant éventuellement dans les deuxième 60 et troisième 62 chambres de s'évacuer vers le réservoir 90, via des canaux ou des tuyaux longitudinaux non visibles sur les dessins. Pour faciliter l'évacuation de l'eau à travers ces canaux 96 et 98 et les canaux et les tuyaux longitudinaux associés, le fond du silencieux enterré comporte avantageusement une légère'pente.

Il est à noter que l'extraction de l'eau du puits 86 peut être effectuée par tout autre moyen approprié, par exemple par des pompes, notamment submersibles (par exemple deux pompes en parallèle), reliées à des tuyauteries d'évacuation.

L'installation fonctionne de la façon suivante.

Au cours du cycle VSA, qui peut être tout cycle connu, les pompes à vide refoulent du gaz résiduaire à la pression atmosphérique, et les diverses vannes sont manoeuvrées pour assurer les liaisons désirées des trois adsorbeurs.

Le gaz refoulé par les pompes à vide 30, 32 véhicule un certain bruit. Ce gaz est introduit par l'un et/ou l'autre des deux raccords 64, 66 dans la première chambre 58. Ensuite, ce gaz est forcé de circuler à travers le grand tube d'impédance 68, ce qui crée un déphasage d'ondes sonores et abaisse ainsi les basses fréquences de bruit. Le gaz circule de la deuxième chambre 60 vers la troisième chambre 62 à travers les deux petits tubes d'impédance 70A, 70B, ce qui abaisse également le bruit des basses fréquences. Les deux petits tubes d'impédance 70A, 70B agencés dans la cloison 56 répartissent de façon sensiblement homogène le débit sur les baffles 76A, 76B de la troisième chambre 62 et augmentent l'efficacité acoustique de cette dernière. Le gaz circule alors à travers les deux séries de baffles 76A, 76B, où le bruit est absorbé (notamment les fréquences moyennes et hautes). Les ondes sonores sont empêchées de se refléter sur la paroi d'extrémité grâce aux deux baffles 82A, 82B agencées sur celle-ci. Le gaz est évacué vers le haut à travers la cheminée 84.

Il est à noter que la cheminée 84 doit être suffisamment haute pour empêcher un danger d'asphyxie à l'azote de l'environnement. Dans un cas typique, la cheminée 84 présente une hauteur d'environ 6 m.

En variante, la cheminée 84 peut être également réalisée en béton, en maçonnerie ou analogue et/ou être munie elle aussi de moyens d'atténuation de bruit supplémentaires, notamment de moyens actifs (hauts-parleurs émettant un contre-bruit) traitant les basses et très basses fréquences.

Le gaz refoulé par les pompes à vide 30, 32 peut contenir de l'eau, notamment de l'eau de refroidissement lorsqu'il s'agit de pompes à vide à injection d'eau. L'eau introduite par le gaz refoulé par les pompes à vide 30, 32 est accumulée dans le réservoir 90 agencé dans le sol de la première chambre 58. La pompe à eau 94 extrait cette eau du réservoir 90 par le puits 86.

Si le cycle VSA comporte des étapes de fonctionnement des pompes sur elles-mêmes, les pompes à vide 30, 32 aspirent du gaz à partir de la deuxième chambre 62, via la conduite 72, ce qui a pour effet que le bruit d'aspiration est atténué par le même silencieux que le bruit de refoulement. Ainsi, on peut renoncer à un silencieux d'aspiration séparé.

Il est à noter que, en variante, comme illustré en traits mixtes sur la Figure 1, d'autres mises à l'air de l'installation peuvent être reliées à cette enceinte enterrée, par exemple la mise à l'air du côté refoulement du compresseur d'air 6 centrifuge ou Roots, via une vanne 99 et une conduite 100, ou de vannes de détente telles que 102, via une conduite 104, pour la mise à l'air des adsorbeurs en cas de cycle à production sous pression.

L'utilisation d'une enceinte enterrée 52 permet de réduire sensiblement le rayonnement du silencieux par rapport à un silencieux aérien en tôle. Les composants d'atténuation de bruit peuvent être dimensionnés plus grands et plus épais, ce qui permet une réduction de bruit plus importante. Ainsi, on peut renoncer à l'utilisation de moyens d'atténuation de bruits actifs, peu efficaces pour les débits d'écoulement importants.

L'enterrement du silencieux a comme autre avantage que l'encombrement du silencieux au sol est pratiquement nul. Le coût d'un tel silencieux est peu élevé, et la possibilité d'y raccorder plusieurs mises à l'air mène à un coût global de l'installation inférieur.

Il est à noter que la perte de charge d'un tel silencieux, de section transversale importante, est de l'ordre de 10 mbar, ce qui est inférieur à la perte de charge d'un silencieux conventionnel. A cet égard, la section du silencieux est déterminée par le débit des pompes à vides et la longueur des chambres par la vitesse de rotation de ces pompes.

Dans une variante (non représentée sur les dessins), l'enceinte enterrée peut contenir des moyens de récupération de chaleur, par exemple un échangeur de chaleur qui s'étend à travers la section transversale de l'enceinte, afin de récupérer une partie de l'énergie de refoulement du gaz pompé. Grâce à la place disponible à l'intérieur de l'enceinte et aux faibles pertes de charge, la récupération de chaleur est facilitée par rapport à un silencieux aérien en tôle. La chaleur récupérée peut être utilisée par exemple pour chauffer l'air aspiré par la conduite d'aspiration 8 lorsque la température ambiante se trouve au-dessous de la température nécessitée par le processus de séparation.

Le silencieux décrit ci-dessus est un exemple de réalisation. Le nombre, le type et l'agencement des moyens d'atténuation de bruit peuvent être modifiés en fonction de l'intensité et du spectre du bruit. Bien entendu, l'application d'un tel silencieux ne se limite pas à une installation comportant deux pompes à vide et trois adsorbeurs. Le nombre et l'agencement des pompes à vide, par exemple des pompes à vide en parallèle, et des absorbeurs peuvent varier.

## Revendications

1. Installation de traitement d'air, du type comportant au moins un circuit de mise à l'atmosphère de gaz résiduaire associé à des moyens (50) d'atténuation du bruit véhiculé par ce gaz résiduaire, **caractérisée en ce que** les moyens d'atténuation de bruit (50) comprennent une enceinte (52) sensiblement fermée et au moins partiellement enterrée et comprenant un recouvrement au moins partiel en terre ou un matériau analogue.

2. Installation selon la revendication 1, **caractérisée en ce que** l'enceinte (52) est totalement enterrée.

3. Installation selon la revendication 1 ou 2, **caractérisée en ce qu'**une partie au moins (30, 32) de l'installation est agencée au-dessus de ladite enceinte (52).

4. Installation selon l'une quelconque des revendications précédentes, **caractérisée en ce que** l'installation comporte au moins une autre mise à l'atmosphère (98, 102) raccordée auxdits moyens d'atténuation de bruit (50).

5. Installation selon l'une quelconque des revendications précédentes, **caractérisée en ce que** lesdits moyens d'atténuation de bruit (50) comportent successivement, d'une entrée de gaz à une sortie de gaz, des moyens d'atténuation de bruit réactifs (68, 70A, 70B) et des moyens d'atténuation de bruit absorptifs (76A, 76B, 82A, 82B).

6. Installation selon la revendication 5, **caractérisée en ce que** lesdits moyens d'atténuation de bruit réactifs comportent deux organes d'atténuation de bruit réactifs (68, 70A, 70B) en série.

7. Installation selon la revendication 5 ou 6, **caractérisée en ce que** les moyens d'atténuation de bruit réactifs comportent des tubes d'impédance (68, 70A, 70B).

8. Installation selon l'une quelconque des revendications précédentes, **caractérisée en ce que** l'installation comporte au moins une pompe à vide (30, 32), notamment destinée à refouler le gaz résiduaire, dont le côté refoulement est relié auxdits moyens d'atténuation de bruit (50).

9. Installation selon la revendication 8, **caractérisée en ce que** l'installation comporte des moyens de liaison (72, 74) du côté aspiration de la pompe à vide (30) auxdits moyens d'atténuation de bruit, pour une marche de la pompe à vide sur elle-même.

10. Installation selon la revendication 9 et la revendication 6, **caractérisée en ce que** l'installation comporte des moyens (72, 74) de liaison du côté aspiration de la pompe à vide (30) auxdits moyens d'atténuation de bruit (50) en aval du premier organe d'atténuation de bruit réactif (68) et en amont du deuxième organe d'atténuation de bruit réactif (70A, 70B), tandis que le côté refoulement de la pompe à vide est relié auxdits moyens d'atténuation de bruit réactifs (68, 70A, 70B) en amont du premier organe d'atténuation de bruit réactif (68).

11. Installation selon l'une des revendications 8 à 10, **caractérisée en ce que** la pompe à vide (30) est une pompe à vide Roots sèche ou humide.

12. Installation selon l'une quelconque des revendications précédentes, **caractérisée en ce que** l'enceinte (52) est fabriquée en béton, en maçonnerie ou analogue.

13. Installation selon la revendication 12, **caractérisée en ce que** l'enceinte (52) comporte une cheminée d'échappement (84) de gaz, notamment en béton, en maçonnerie ou analogue.

14. Installation selon la revendication 13, **caractérisée en ce que** la cheminée comporte des moyens d'atténuation de bruit supplémentaires, notamment de type absorptif ou actif.

15. Installation selon l'une quelconque des revendications 12 à 14, **caractérisée en ce que** l'enceinte (52) comporte des moyens de recueil et d'extraction d'eau (90, 94, 96, 98).

16. Installation selon l'une quelconque des revendications précédentes, **caractérisée en ce qu'**elle est une installation de séparation de gaz de l'air par adsorption à modulation de pression.

17. Installation selon l'une quelconque des revendications précédentes, **caractérisé en ce que** l'enceinte (52) comprend des moyens de récupération de chaleur pour mettre le gaz résiduaire en relation d'échange thermique avec l'air entrant.

## Patentansprüche

1. Anlage zur Luftbehandlung der Art, die mindestens einen Kreislauf zum Abgeben von Restgas an die Atmosphäre umfasst, der mit Mitteln (50) zur Geräuschreduzierung, die von diesem Restgas vermittelt werden, verknüpft ist, **dadurch gekennzeichnet, dass** die Mittel zur Geräuschreduzierung (50) ein im Wesentlichen geschlossenes und mindestens teilweise unterirdisches Gehäuse (52) mit einer mindestens partiellen Abdeckung aus Erde oder einem ähnlichen Material umfassen.

2. Anlage nach Anspruch 1, **dadurch gekennzeichnet, dass** das Gehäuse (52) komplett unterirdisch ist.

3. Anlage nach Anspruch 1 oder 2, **dadurch gekennzeichnet, dass** mindestens ein Teil (30, 32) der Anlage über dem Gehäuse (52) angeordnet ist.

4. Anlage nach einem der vorhergehenden Ansprüche,
**dadurch gekennzeichnet, dass** die Anlage mindestens einen weiteren Ausgang (98, 102) an die Atmosphäre aufweist, der an die Mittel (50) zur Geräuschreduzierung angeschlossen ist.

5. Anlage nach einem der vorhergehenden Ansprüche,
**dadurch gekennzeichnet, dass** die Mittel (50) zur Geräuschreduzierung aufeinander folgend von einem Gaseinlass zu einem Gasaustritt, reaktive Mittel (68, 70A, 70B) zur Geräuschreduzierung und absorptive Mittel (76A, 76B, 82A, 82B) zur Geräuschreduzierung aufweisen.

6. Anlage nach Anspruch 5, **dadurch gekennzeichnet, dass** die reaktiven Mittel zur Geräuschreduzierung zwei reaktive in Reihe geschaltete Geräuschreduzierungsglieder (68, 70A, 70B) aufweisen.

7. Anlage nach Anspruch 5 oder 6, **dadurch gekennzeichnet, dass** die reaktiven Mittel zur Geräuschreduzierung Impedanzrohre (68, 70A, 70B) aufweisen.

8. Anlage nach einem der vorhergehenden Ansprüche, **dadurch gekennzeichnet, dass** die Anlage mindestens eine Vakuumpumpe (30, 32) aufweist, die insbesondere zum Verdrängen des Restgases bestimmt ist und deren Verdrängungsseite mit den Mitteln (50) zur Geräuschreduzierung verbunden ist.

9. Anlage nach Anspruch 8, **dadurch gekennzeichnet, dass** die Anlage Mittel (72, 74) zum Anschluss der Ansaugseite der Vakuumpumpe (30) an die Mittel zur Geräuschreduzierung zum Betrieb der Vakuumpumpe auf derselben aufweist.

10. Anlage nach Anspruch 9 und 6, **dadurch gekennzeichnet, dass** die Anlage Mittel (72, 74) zum Anschluss der Ansaugseite der Vakuumpumpe (30) an die Mittel (50) zur Geräuschreduzierung hinter dem ersten reaktiven Geräuschreduzierungsglied (68) und vor dem zweiten reaktiven Glied zur Geräuschreduzierungsglied (70A, 70B) aufweist, wohingegen die Verdrängungsseite der Vakuumpumpe mit den reaktiven Mitteln (68, 70A, 70B) zur Geräuschreduzierung vor dem ersten reaktiven Geräuschreduzierungsglied (68) verbunden ist.

11. Anlage nach einem der Ansprüche 8 bis 10, **dadurch gekennzeichnet, dass** die Vakuumpumpe (30) eine trocken- oder nasslaufende Wälzkolbenvakuumpumpe ist.

12. Anlage nach einem der vorhergehenden Ansprüche, **dadurch gekennzeichnet, dass** das Gehäuse (52) aus Beton, Mauerwerk oder ähnlichem gefertigt ist.

13. Anlage nach Anspruch 12, **dadurch gekennzeichnet, dass** das Gehäuse (52) einen Abzug (84) zum Ausstoßen von Gas, insbesondere aus Beton, Mauerwerk oder ähnlichem, aufweist.

14. Anlage nach Anspruch 13, **dadurch gekennzeichnet, dass** der Abzug zusätzliche Mittel zur Geräuschreduzierung, insbesondere der absorptiven oder aktiven Art, aufweist.

15. Anlage nach einem der Ansprüche 12 bis 14, **dadurch gekennzeichnet, dass** das Gehäuse (52) Mittel zum Sammeln und Extrahieren von Wasser (90, 94, 96, 98) aufweist.

16. Anlage nach einem der vorhergehenden Ansprüche, **dadurch gekennzeichnet, dass** es sich bei ihr um eine Anlage zum Trennen von Gas von der Luft durch Druckwechseladsorption handelt.

17. Anlage nach einem der vorhergehenden Ansprüche, **dadurch gekennzeichnet, dass** das Gehäuse (52) Mittel zur Wärmerückgewinnung umfasst, um das Restgas in Wärmeaustauschbeziehung mit der eintretenden Luft zu bringen.

## Claims

1. Air treatment plant, of the type including at least one waste gas venting circuit linked to means (50) for attenuating the noise conducted by this waste gas, **characterized in that** the noise attenuation means (50) comprise a substantially closed and at least partially buried enclosure (52) comprising an at least partial covering with earth or a similair material.

2. Plant according to Claim 1, **characterized in that** the enclosure (52) is completely buried.

3. Plant according to Claim 1 or 2, **characterized in that** at least part (30, 32) of the plant is placed above the said enclosure (52).

4. Plant according to any one of the preceding claims, **characterized in that** the plant includes at least one other vent (98, 102) connected to the said noise attenuation means (50).

5. Plant according to any one of the preceding claims, **characterized in that** the said noise attenuation means (50) include, in succession, from a gas inlet to a gas outlet, reactive noise attenuation means (68, 70A, 70B) and absorptive noise attenuation means (76A, 76B, 82A, 82B).

6. Plant according to Claim 5, **characterized in that** the said reactive noise attenuation means comprise two reactive noise attenuation members (68, 70A, 70B) in series.

7. Plant according to Claim 5 or 6, **characterized in that** the reactive noise attenuation means comprise impedance tubes (68, 70A, 70B).

8. Plant according to any one of the preceding claims, **characterized in that** it includes at least one vacuum pump (30, 32), especially intended to deliver the waste gas, the delivery side of which is connected to the said noise attenuation means (50).

9. Plant according to Claim 8, **characterized in that** it includes means (72, 74) for connecting the suction side of the vacuum pump (30) to the said noise attenuation means, for operation of the vacuum pump on itself.

10. Plant according to Claim 9 and Claim 6, **characterized in that** it includes means (72, 74) for connecting the suction side of the vacuum pump (30) to the said noise attenuation means (50) downstream of the first reactive noise attenuation member (68) and upstream of the second reactive noise attenuation member (70A, 70B), while the delivery side of the vacuum pump is connected to the said reactive noise attenuation means (68, 70A, 70B) upstream of the first reactive noise attenuation member (68).

11. Plant according to one of Claims 8 to 10, **characterized in that** the vacuum pump (30) is a wet or dry Roots vacuum pump.

12. Plant according to any one of the preceding claims, **characterized in that** the enclosure (52) is manufactured from concrete, masonry or the like.

13. Plant according to Claim 12, **characterized in that** the enclosure (52) includes a gas exhaust duct (84), especially made of concrete, masonry or the like.

14. Plant according to Claim 13, **characterized in that** the duct includes additional noise attenuation means, especially of the absorptive or active type.

15. Plant according to any one of Claims 12 to 14, **characterized in that** the enclosure (52) includes water collection and extraction means (90, 94, 96, 98).

16. Plant according to any one of the preceding claims, **characterized in that** it is a plant for separating gases from air by pressure swing adsorption.

17. Plant according to any one of the preceding claims, **characterized in that** the enclosure (52) comprises heat recovery means in order to bring the waste gas into heat exchange relationship with the incoming air.
